# EUROPEAN PATENT APPLICATION

(11) **EP 4 102 375 A1**
(43) Date of publication of application: **14.12.2022**
(21) Application number: 22173241.5
(22) Date of filing: 13.05.2022
(51) Int. Cl.: G06F 15/02

(54) **MATHEMATICAL EXPRESSION DISPLAY CONTROL APPARATUS, MATHEMATICAL EXPRESSION DISPLAY CONTROL METHOD, AND MATHEMATICAL EXPRESSION DISPLAY CONTROL PROGRAM**

(30) Priority: 10.06.2021 JP 2021097402
(71) Applicant: Casio Computer Co., Ltd., Tokyo 151-8543 (JP)
(72) Inventor: Tanaka, Hirokazu, Hamura-shi, Tokyo, 205-8555 (JP)
(74) Representative: Grünecker Patent- und Rechtsanwälte PartG mbB

(57) **Abstract**

A mathematical expression display control apparatus according to a first aspect of the disclosure includes: a determination unit (11) that determines whether or not there is an error in a mathematical expression that is input by a user; and a display control unit (11) that causes a display device (14) to display, if it is determined that there is an error in the mathematical expression, an erroneous part with highlighting to differentiate it from the other parts in the mathematical expression.

## Description

### FIELD

The present disclosure relates generally to a mathematical expression display control apparatus, a mathematical expression display control method, and a mathematical expression display control program.

### BACKGROUND

A scientific calculator is known as a type of electronic calculator capable of performing complicated mathematical calculations such as various types of functions. Application software that realizes functions equivalent to those of a scientific calculator is also known. With a scientific calculator or an application having functions similar thereto, a user inputs a desired mathematical expression. Upon input, the scientific calculator or the application having functions similar thereto returns a calculation result of the expression to the user.

### SUMMARY

A mathematical expression display control apparatus according to a first aspect of the disclosure includes: a determination unit (11) that determines whether or not there is an error in a mathematical expression that is input by a user; and a display control unit (11) that causes a display device (14) to display, if it is determined that there is an error in the mathematical expression, an erroneous part with highlighting to differentiate it from the other parts in the mathematical expression.

A mathematical expression display control method according to a second aspect of the disclosure includes: determining, by a determination unit of a mathematical expression display control apparatus, whether or not there is an error in a mathematical expression that is input by a user; and causing, by a display control unit of the mathematical expression display control apparatus, a display device to display, if it is determined that there is an error in the mathematical expression, an erroneous part with highlighting to distinguish the part from the other parts.

A mathematical expression display control program causing a computer to perform: determining whether or not there is an error in a mathematical expression that is input by a user; and causing a display device to display, if it is determined that there is an error in the mathematical expression, an erroneous part with highlighting to differentiate the part from other parts.

### BRIEF DESCRIPTION OF THE DRAWINGS

FIG. 1 is a diagram showing a configuration example of a calculator as an example of a display control apparatus according to one embodiment.
FIG. 2 is an outer appearance front view of a calculator of an example.
FIG. 3A is a diagram illustrating a display example of a display.
FIG. 3B is a diagram illustrating a display example of a display.
FIG. 3C is a diagram illustrating a display example of a display.
FIG. 4 is a flowchart showing an input process in a calculator.
FIG. 5 is a flowchart of an input determination process.
FIG. 6 is a diagram showing an example of highlighting 1.
FIG. 7 is a diagram showing an example of highlighting 2.
FIG. 8A is a diagram showing an example of highlighting 3.
FIG. 8B is a diagram showing an example of highlighting 3.
FIG. 9 is a diagram showing an example of highlighting 4.
FIG. 10 is a diagram showing an example of highlighting 5.
FIG. 11A is a diagram showing a first example of a normal display.
FIG. 11B is a diagram showing a second example of a normal display.

### DETAILED DESCRIPTION

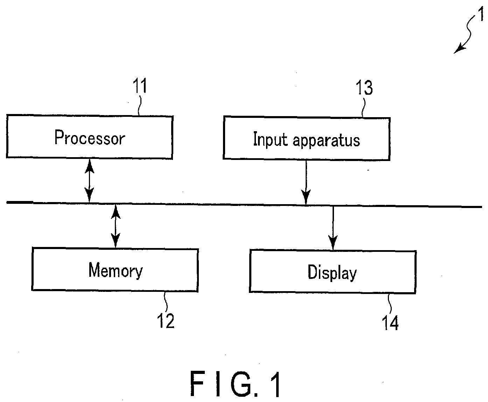

FIG. 1 is a diagram showing a configuration example of a calculator 1 as an example of a display control apparatus according to one embodiment. The calculator 1 includes a processor 11, a memory 12, an input apparatus 13, and a display 14. The calculator 1 is, for example, an electronic calculator having a function calculation function, namely a so-called scientific calculator. The calculator 1 may be a different type of electronic device having a function calculation function other than a scientific calculator. Herein, the calculator 1 may have elements other than those shown in FIG. 1.

The processor 11 controls various operations of the calculator 1. The processor 11 may be a CPU, an ASIC, or an FPGA, etc. The processor 11 may be constituted by two or more processors. The processor 11 operates as a determination unit for determining whether or not there is an error in a mathematical expression that is input by a user. The processor 11 operates as a display control unit that controls displaying on the display 14 in accordance with a determination result obtained by a determination unit.

The memory 12 includes a RAM and a ROM. The RAM is a non-volatile memory and may operate as a storage unit. The RAM is used as a working memory for temporarily storing various data in the processor 11. In the present embodiment, the RAM has a storage area for storing arguments of a function that is input via numerical value keys, etc., calculation results of a mathematical expression, and so on. The ROM is a non-volatile memory. The ROM stores an activation program of the calculator 1 and a calculator program, etc. The calculator program in the present embodiment is a program for calculating a mathematical expression that is input by a user and executing processing of presenting a calculation result to the user. The calculator program in the present embodiment includes a mathematical expression display control program. The mathematical expression display control program is a program for executing processing for notifying a user of error by highlighting an erroneous part in a mathematical expression if there is an error in the mathematical expression that is input during the user's input of the mathematical expression.

The input apparatus 13 is an operation interface with which a user operates the calculator 1. Upon receipt of an operation of the input apparatus 13, an input signal in accordance with the operation is transmitted to the processor 11.

The display 14 is a display unit, such as a liquid crystal display, etc. The display 14 displays various information relating to the calculator functions. The display 14 may be a display capable of displaying in color. The display 14 may be integrated with a touch panel.

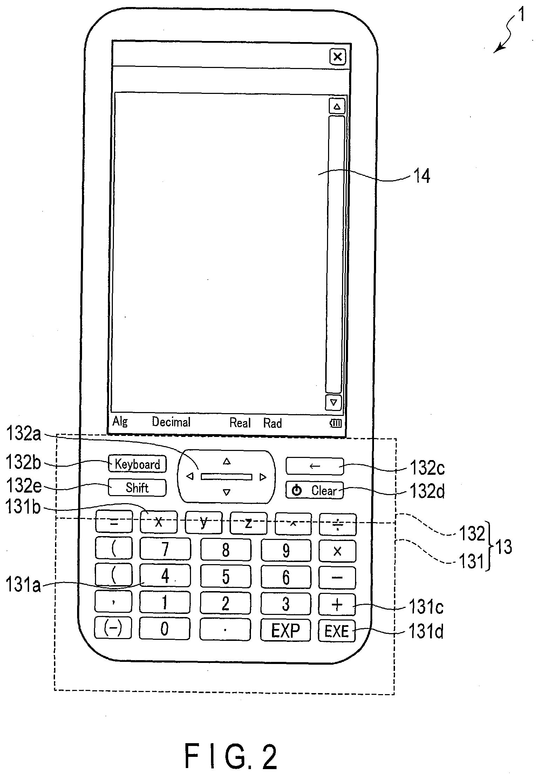

FIG. 2 is an outer appearance front view of the calculator 1 of an example. As shown in FIG. 2, the input apparatus 13 and the display 14 are provided on the front surface of the housing of the calculator 1.

The input apparatus 13 has a keypad 131 and function keys 132. The keypad 131 is an operation unit that includes various keys used for inputting, etc. mathematical expressions. The function key 132 is a group of keys for implementing various functions of the calculator 1.

The keypad 131 includes, for example, numerical value keys 131a, letter keys 131b, operator keys 131c, and an execution key 131d. The numerical value keys 131a are used to input numerical values, and include keys respectively corresponding to numerical values from 0 to 9, a key for inputting a predefined numerical value, such as a Napier number, and a key for inputting a decimal point. The letter keys 131b are used to input a literal expression, and include keys respectively corresponding to letters, such as x, y, and z. The operator keys 131c are used to input simple mathematical expressions such as the four fundamental arithmetic operations, and correspond to operators such as addition, subtraction, multiplication, division, exponentiation, an equal sign, a comma, parentheses, etc. The execution key 131d is used to instruct execution of a mathematical expression that is input.

The function keys 132 include, for example, a cursor key 132a, a keyboard key 132b, an arrow key 132c, a clear key 132d, and a shift key 132e. The cursor key 132a is used for an operation of moving a cursor displayed on the display 14. The keyboard key 132b is used to switch between displaying and non-displaying of the software keyboard on the display 14. The arrow key 132c is used for an operation of restoring an immediately previous input to the display 14, and so on. The clear key 132d is used for an operation of clearing a calculation result. The shift key 132e is used together with the other keys to enable a different function to be allocated to a key when pressed after the shift key is pressed. For example, if the clear key 132d is pressed after the shift key 132e is pressed, the clear key 132d serves as a power off key to turn off the calculator 1.

The input apparatus 13 shown in FIG. 2 is an example. The calculator 1 does not necessarily have the same input apparatus as that shown in FIG. 2. For example, some of the keys shown in FIG. 2 may be omitted, or keys other than those shown in FIG. 2 may be added.

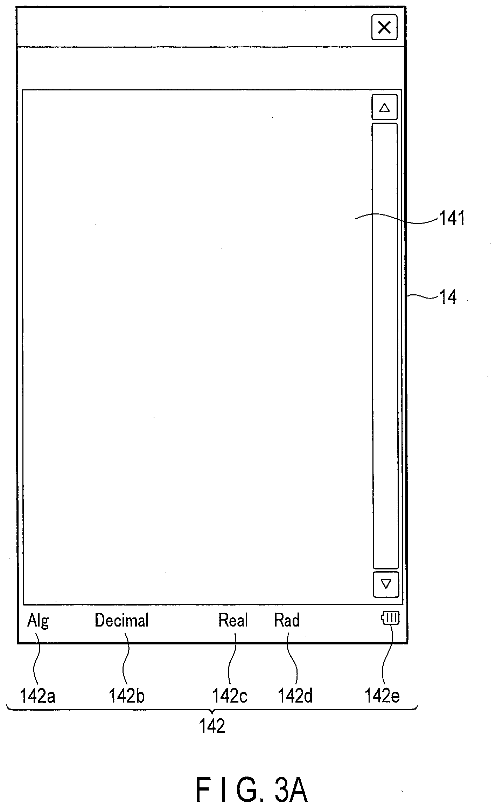

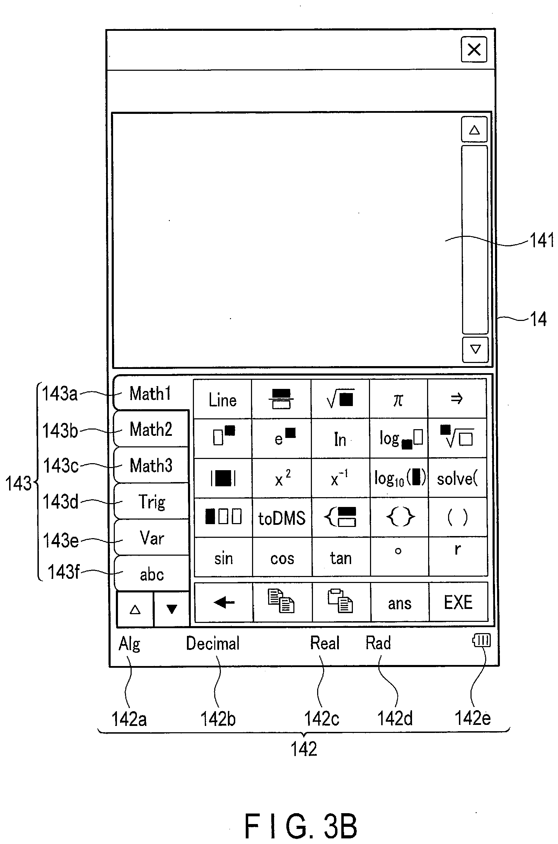

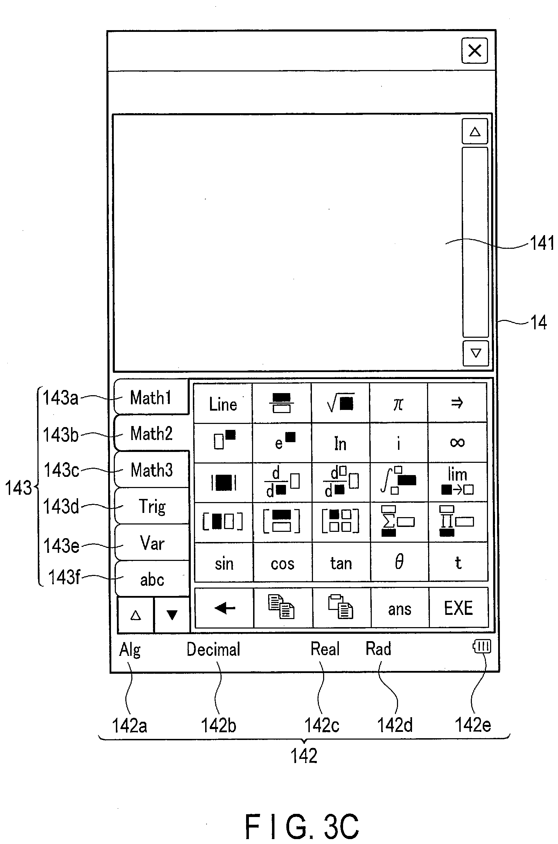

FIGS. 3A, 3B, and 3C are diagrams showing display examples of the display 14. After activating the calculator 1, the display 14 displays a working space 141, like the one shown in FIG. 3A. A status bar 142 is displayed outside the working space 141. In the status bar 142, various status indicators 142a, 142b, 142c, 142d, and 142e of the calculator 1 are displayed.

For example, the status indicator 142a displays which of an "Algebra (Alg) mode" or an "Assistant (Assist) mode" is currently activated. In the "Algebra mode", a user's input mathematical expression is first neatened and then displayed in the working space 141 of the display 14. In the "Assistant mode", a user's input mathematical expression is displayed as-is in the working space 141 of the display 14. The status indicator 142a may be configured as a software button for changing a mode.

The status indicator 142b shows a status of a display format of a calculation result of a mathematical expression. For example, the display format includes a format of displaying a result containing a decimal fraction as-is, and a format of displaying a result containing a decimal fraction in accordance with a mathematical notation. The status indicator 142b may be configured as a software button for changing a display format.

The status indicator 142c shows which of a "Real mode" or a "Complex (Cplx) mode" is currently activated. The "Real mode" is a real-number mode for calculating real numbers. In the "Real mode", only the calculation of the real-number domain is allowed. In other words, in the present embodiment, if a mathematical expression having a complex number as a solution is input in the "Real" mode, an error is displayed. The "Complex mode" is a complex-number mode for calculating complex numbers. In the "Real mode", the calculation of complex number areas is allowed in addition to the calculation of real-number areas. In the present embodiment, the status indicator 142c may be configured as a software button for changing a mode.

The status indicator 142d displays a setting of a unit of angle. A unit of an angle is degree, radian, grade, and so on. The status indicator 142d may be configured as a software button for changing a unit of angle.

The status indicator 142e displays a status of a remaining battery level of the calculator 1.

If the user presses the keyboard key 132b, the software keyboard 143 is displayed in the lower part of the working space 141 as shown in FIG. 3B. The software keyboard 143 has a plurality of software keyboards 143a, 143b, 143c, 143d, 143e, and 143f having different key arrangements according to their purposes.

For example, the Math1 keyboard 143a is a keyboard in which the keys often used for inputting various types real-number calculations are arranged, as shown in FIG. 3B. The Math1 keyboard 143a includes keys pre-assigned with the functions used for various calculations, such as the four fundamental arithmetic operations, fraction calculations, root calculations, exponential calculations, and logarithmic calculations. The Math2 keyboard 143b is a keyboard in which many keys used for inputting certain function calculations, such as differential calculations, integral calculations, limit calculations, and complex number calculations, are arranged. The Math3 keyboard 143c is a keyboard in which many keys used for inputting operators, such as an equal sign, inequality signs, and parentheses, are arranged. The Trigonometric (Trig) keyboard 143d is a keyboard in which many keys used for inputting trigonometrical function calculations are arranged. The Variable (Var) keyboard 143e is a keyboard in which many letter keys used for inputting variable identifiers are arranged. The abc keyboard 143f is a keyboard in which many keys used for inputting letters and numbers are arranged.

The Math1 keyboard 143a, the Math2 keyboard 143b, the Math3 keyboard 143c, the Trigonometric keyboard 143d, the Variable keyboard 143e, and the abc keyboard 143f are configured in such a manner that a keyboard can be switched to another by tabs. For example, if the user selects a tab of the Math2 keyboard 143b, the keyboard displayed on the display 14 is switched from the Math1 keyboard 143a shown in FIG. 3B to the Math2 keyboard 143b shown in FIG. 3C.

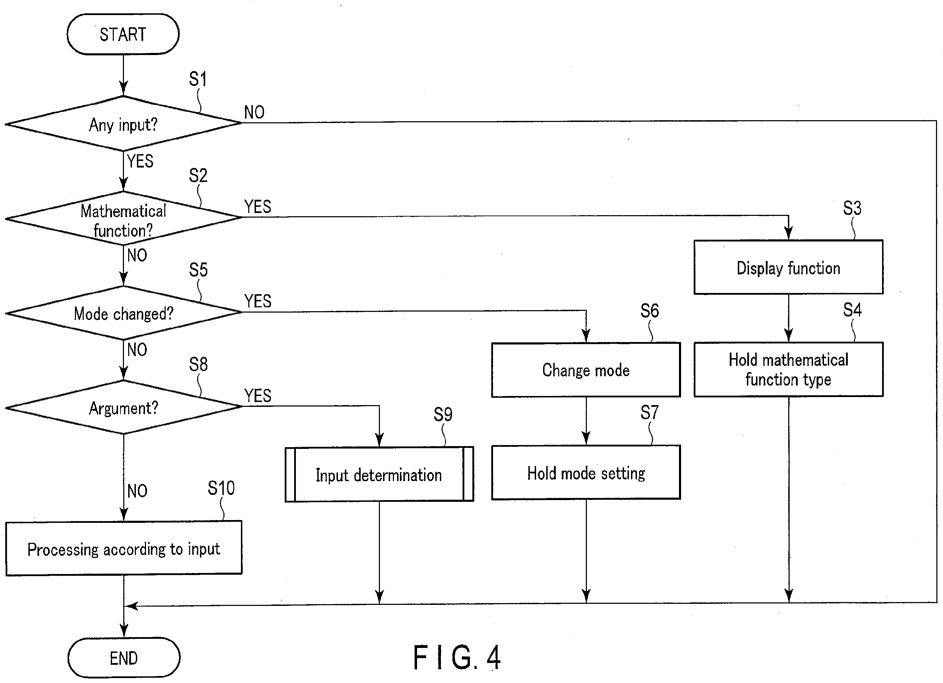

Hereinafter, an operation of the calculator 1 is described. FIG. 4 is a flowchart showing an input process in the calculator 1. The processing in FIG. 4 is executed by the processor 11 in accordance with a calculator program stored in the memory 12. In the input processing, a user's input mathematical expression is displayed on the working space 141 of the display 14. During the mathematical expression input processing, the processor 11 determines if the user's input is erroneous in terms of mathematical rules, specification of the calculator 1, and a currently activated mode. When an erroneous input is made, the processor 11 gives an alert to a user.

In step S1, the processor 11 determines whether or not there is a user's input. The key in step S1 includes both hardware keys and software keys. In step S1, if it is determined that there is an input, the processing proceeds to step S2. In step S1, if it is determined that there is an input, the processor 11 terminates the processing of FIG. 4. In this case, the processor 11 waits for an input at a next timing of the processing of FIG. 4.

In step S2, the processor 11 determines whether or not the input is an input of a mathematical function key. The mathematical function keys are pre-assigned with certain functions, such as a trigonometric function, a matrix, an exponential function, and a logarithmic function. In step S2, if it is determined that the input is an input of a mathematical function key, the processing proceeds to step S3. In step S2, if it is not determined that the input is an input of a mathematical function key, the processing proceeds to step S5.

In step S3, the processor 11 causes the display 14 to display a mathematical function on the working space 141 according to the input.

In step S4, the processor 11 causes the RAM of the memory 12 to hold a mathematical function type of a mathematical function for which an input with keys has been made. Thereafter, the processor 11 terminates the processing of FIG. 4. The mathematical function type is information for identifying various functions used in the calculator 1, such as trigonometric functions, a matrix, exponential functions, and logarithmic functions. The mathematical function type is an ID number assigned to each function, for example.

In step S5, the processor 11 determines whether or not the input is an input of a mode change. An input of a mode change is an operation of selecting one from the status indicator 142a, the status indicator 142b, the status indicator 142c, or the status indicator 142d. In step S5, if it is determined that the input is an input of a mode change, the processing proceeds to step S6. If it is not determined that the input is an input of a mode change, the processing proceeds to step S8.

In step S6, the processor 11 changes a mode in accordance with the input. For example, the status indicator 142c is selected by the user, and the processor 11 switches between the Real mode and the Complex mode. The processor 11 updates the status indicator 142c.

In step S7, the processor 11 causes, for example, the RAM of the memory 12 to hold a changed mode setting. Thereafter, the processor 11 terminates the processing of FIG. 4. A mode setting is information of setting of various modes of the calculator 1, for example information regarding which of the foregoing Real mode or Complex mode is currently activated.

In step S8, the processor 11 determines whether or not the input is an input of an argument. The input of an argument is for example an input of a numerical value or an operator. In step S8, if it is determined that the input is an input of an argument, the processing proceeds to step S9. In step S8, if it is not determined that the input is an input of an argument, the processing proceeds to step S10.

In step S9, the processor 11 performs input determination processing. After the input determination processing, the processor 11 terminates the processing of FIG. 4. The input determination processing is processing of determining whether or not the input of an argument by a user is made without errors. An error in an input in the present embodiment is an event in which an error is returned by the calculator 1. The details of the input determination processing are described later.

In step S10, the processor 11 performs processing in accordance with the other inputs. After the processing in accordance with the other inputs, the processor 11 terminates the processing of FIG. 4. The processing in accordance with the other inputs includes execution of a calculation when the execution key 131d is selected and clearing of a calculation result after the clear key 132d is selected.

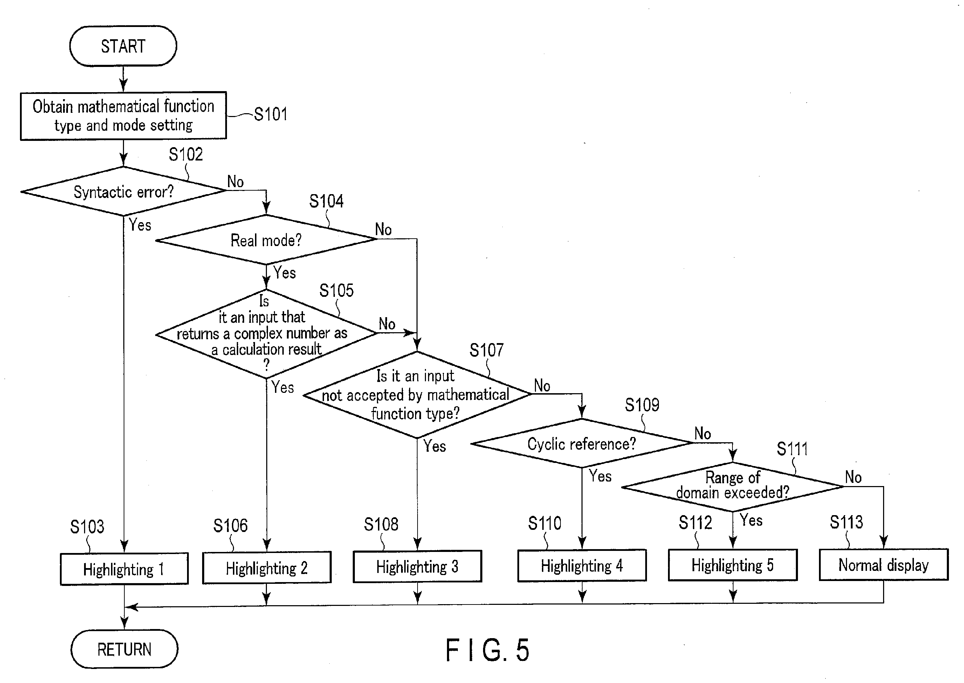

Next, the input determination processing is described. FIG. 5 is a flowchart of an input determination process. In step S101, the processor 11 obtains a mathematical type and a mode setting stored in the RAM of the memory 12, for example.

In step S102, the processor 11 determines whether or not there is a syntactic error in the mathematical expression. For example, since operators, such as an addition symbol, are never consecutive in a normal mathematical expression, if such an input of consecutive operators is made, it is determined that there is a syntactic error in the mathematical expression. In step S102, if it is determined that there is a syntactic error in the mathematical expression, the processing proceeds to step S103. In step S102, if it is not determined that there is a syntactic error in the mathematical expression, the processing proceeds to step S104.

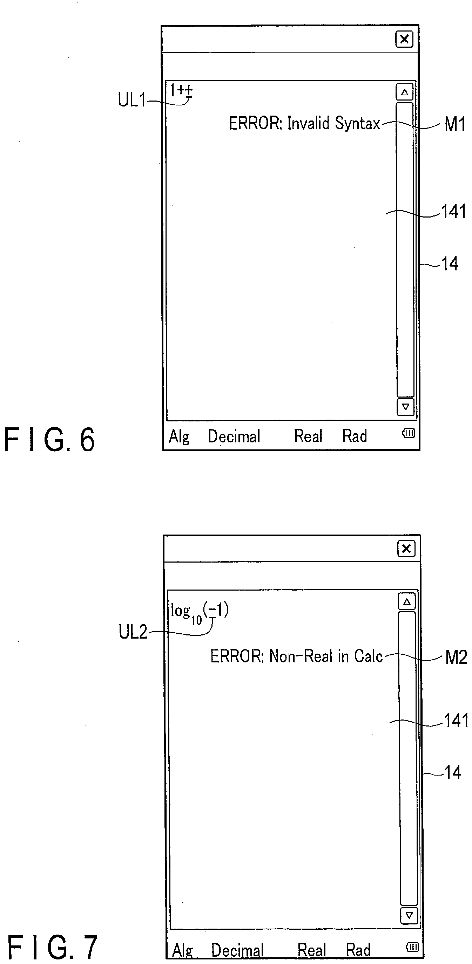

In step S103, the processor 11 causes the display 14 to display highlighting 1 in the working space 141 of the display 14. Thereafter, the processor 11 terminates the processing of FIG. 5 and returns to the processing of FIG. 4. The highlighting 1 is a display for notifying a user of a possibility of a syntactic error in the mathematical expression. FIG. 6 is a diagram showing an example of the highlighting 1. In the highlighting 1, an underline UL1 is applied to a part presumed to be a syntactic error. For example, in FIG. 6, the underline UL1 is applied to the second "+" symbol of the consecutive "+" symbols. With the highlighting 1, an error message "Invalid Syntax" is displayed as an error message M1 indicating that there is a syntactic error. The display location of the error message M1 is a row immediately below a most recently input mathematical expression, for example.

In step S104, the processor 11 determines whether or not the Real mode is currently activated based on the obtained mode setting. In step S104, if it is determined that the Real mode is currently activated, the processing proceeds to step S105. In step S104, if it is determined that the Real mode is not currently activated, in other words, the Complex mode is currently activated, the processing proceeds to step S107.

In step S105, the processor 11 determines whether or not an input that will return a complex number as a calculation result is made. In other words, since an input that will return a complex number as a calculation result is determined to be an error during the activation of the Real mode, such an input is prohibited. For example, if an imaginary number unit i or j is input, a negative numerical value is input as a base of an exponential function or a logarithmic function, or a negative numerical value is input as an antilogarithm of a logarithmic function, it is determined that an input that will return a complex number as a calculation result is made. In step S105, if it is determined that an input that will return a complex number as a calculation result is made, the processing proceeds to step S106. In step S105, if it is not determined that an input that will return a complex number as a calculation result is made, the processing proceeds to step S107.

In step S106, the processor 11 causes the display 14 to display highlighting 2 in the working space 141 of the display 14. Thereafter, the processor 11 terminates the processing of FIG. 5, and returns to the processing of FIG. 4. The highlighting 2 is a display for notifying a user of a possibility that an input that returns a complex number as a calculation result might have been input. FIG. 7 is a diagram showing an example of the highlighting 2. In the highlighting 2, an underline UL2 is applied to an input part that will potentially return a complex number as a calculation result. For example, in FIG. 7, an underline UL2 is applied to the symbol "-" in "-1" that is input as an antilogarithm of a logarithmic function. With the highlighting 2, an error message "Non-real in Calc" is displayed as an error message M2 indicating that a complex number may be returned as a calculation result. The display location of the error message M2 is a row immediately below a most recently input mathematical expression, for example.

In step S107, the processor 11 determines whether or not an argument that is not accepted by a mathematical function type of a currently displayed mathematical function has been input based on an obtained mathematical function type. An unaccepted argument is determined for each mathematical function type, for example. For example, a function P(x) accepts only integers as an argument; a function Q(x) accepts only real numbers as an argument; a function R(x) does not accept matrices as an argument; a function S(x) does not accept character strings as an argument; a function T(x) does not accept series as an argument. Unaccepted arguments are not limited to those defined by mathematical rules and may include those defined by specifications, etc. of the calculator 1. In step S107, if it is determined that an argument not accepted by a mathematical function type of a currently displayed mathematical function is input, the processing proceeds to step S108. In step S107, if it is not the case that an argument not accepted by a mathematical function type of a currently displayed mathematical function is input, the processing proceeds to step S109.

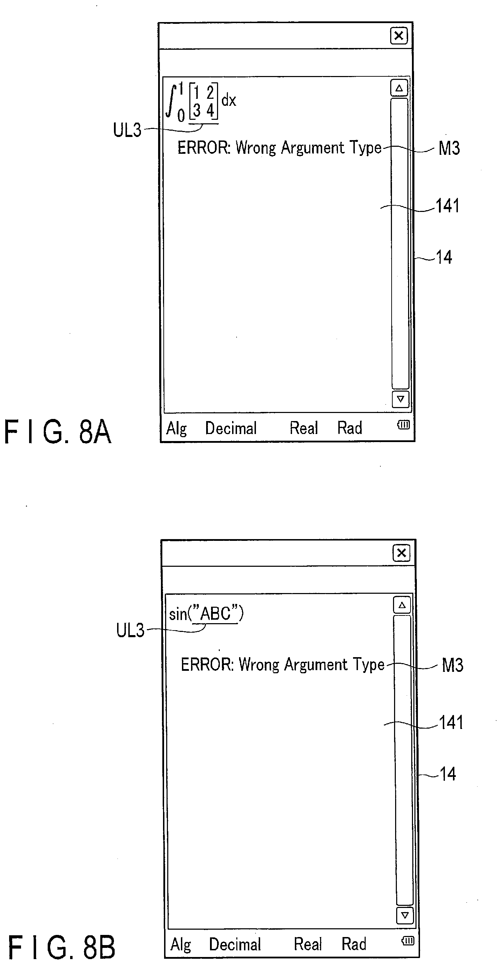

In step S108, the processor 11 causes the display 14 to display highlighting 3 in the working space 141 of the display 14. Thereafter, the processor 11 terminates the processing of FIG. 5 and returns to the processing of FIG. 4. The highlighting 3 is a display for notifying a user that the input argument is an argument not accepted by the currently displayed mathematical function. FIGS. 8A and 8B are a diagram showing an example of highlighting 3. In the highlighting 3, an underline UL3 is applied to an argument not accepted by the currently displayed mathematical function. For example, if matrices are not accepted as an argument of an integral function in the calculator 1, the underline UL3 is applied to the matrix as shown in FIG. 8A. In the highlighting 3, an error message "Wrong Argument Type" is also displayed as an error message M3 indicating that the argument is not accepted. The display location of the error message M3 is a row immediately below a most recently input mathematical expression, for example. Similarly, for example, if letter strings are not accepted as an argument of a trigonometric function in the calculator 1, the underline UL3 is applied to the letter string shown in FIG. 8B. As an error message M3 indicating that the argument is not accepted, an error message "Wrong Argument Type" is also displayed.

In step S109, the processor 11 determines whether or not a cyclic reference is included in the input expression. In step S109, if it is determined that a cyclic reference is included in the input expression, the processing proceeds to step S110. In step S109, if it is not determined that a cyclic reference is included in the input expression, the processing proceeds to step Sill.

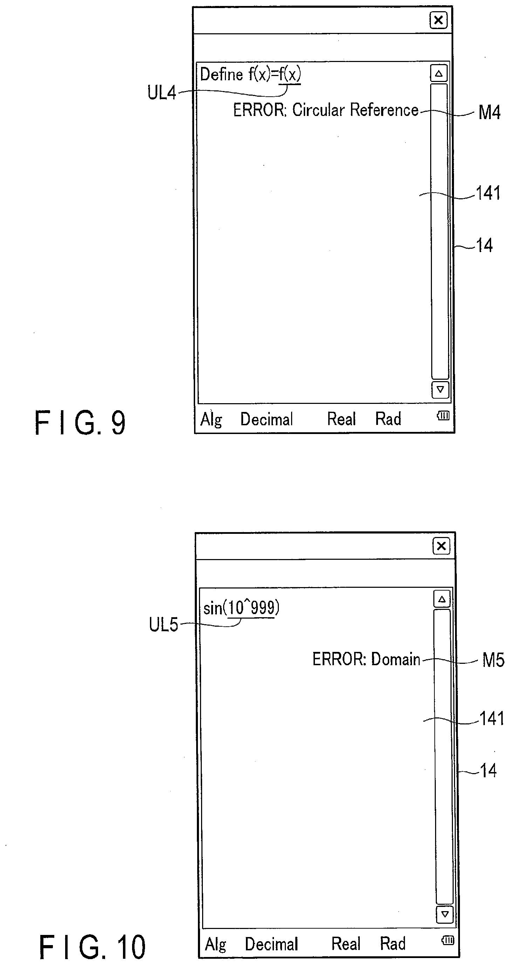

In step S110, the processor 11 causes the display 14 to display highlighting 4 in the working space 141 of the display 14. Thereafter, the processor 11 terminates the processing of FIG. 5 and returns to the processing of FIG. 4. The highlighting 4 is a display for notifying a user that a cyclic reference is included in the input expression. FIG. 9 is a diagram showing an example of the highlighting 4. In the highlighting 4, an underline UL4 is applied to a part considered to be a cyclic reference. For example, in FIG. 9, the underline UL4 is applied to the part of f(x) on the right side of the definition function f(x) = f(x). In the highlighting 4, an error message "Circular Reference" is also displayed as an error message M4 indicating that a cyclic reference is included. The display location of the error message M4 is a row immediately below a most recently input mathematical expression, for example.

In step S111, the processor 11 determines whether or not an argument that is input to a currently displayed mathematical function is outside the range of a domain based on an obtained mathematical function type. If it is determined in step S111 that the argument that is input to a currently displayed mathematical function is outside the range of a domain, the processing proceeds to step S112. If it is not determined in step S111 that the argument that is input to a currently displayed mathematical function is outside the range of a domain, the processing proceeds to step S113.

In step S112, the processor 11 causes the display 14 to display highlighting 5 in the working space 141 of the display 14. Thereafter, the processor 11 terminates the processing of FIG. 5 and returns to the processing of FIG. 4. The highlighting 5 is a display for notifying a user that the input argument is outside the defined range of a domain. FIG. 10 is a diagram showing an example of the highlighting 5. In the highlighting 5, an underline UL5 is applied to an argument that is outside the range of a domain. For example, in FIG. 10, an underline UL5 is applied to the numerical value in parenthesis in a trigonometric function. In the highlighting 5, an error message "Domain" is displayed as an error message M5 indicating that the argument is outside a domain. The display location of the error message M5 is a line immediately below a most recently input mathematical expression, for example.

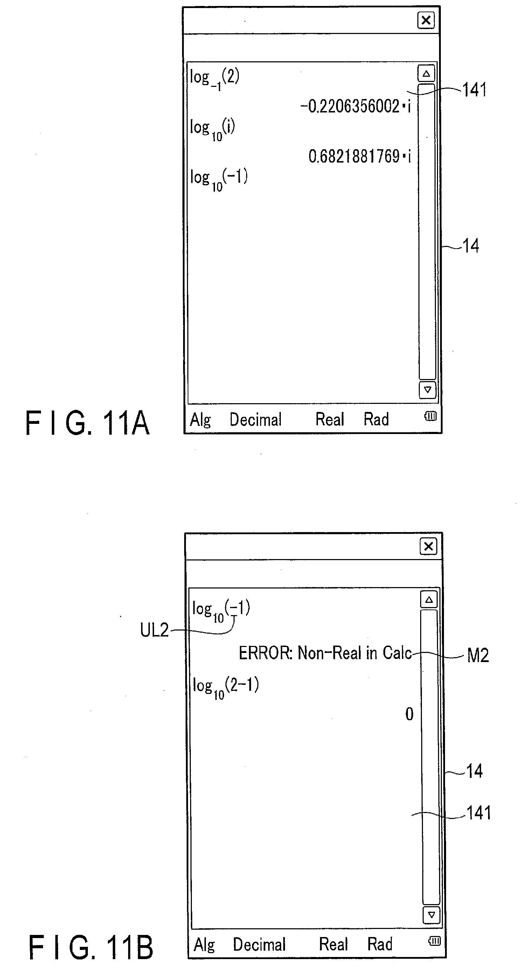

In step S113, a normal display is provided in the working space 141 of the display 14. Thereafter, the processor 11 terminates the processing of FIG. 5 and returns to the processing of FIG. 4. In the normal display, a user's input numerical value or operator is displayed as-is, without highlighting. FIG. 11A is a diagram showing a first example of a normal display. For example, in the Complex mode, a normal display is shown even for an input that will return a complex number as a calculation result, unlike the case in which an imaginary number unit i is input during the Real mode. As shown in FIG. 11A, no underline is displayed in the normal displayed. FIG. 11B is a diagram showing a second example of the normal display. In the present embodiment, as shown in FIG. 7, when a negative number is input to a logarithmic function, the highlighting 2 is performed. On the other hand, if a condition that invokes the highlighting 2 is released in a later input, a normal display is shown. For example, as shown in FIG. 11B, if "2" is successively input after "-1" as an argument of a logarithmic function, which renders the argument "2-1", a normal display is shown. In this case, the underline UL2 applied to the symbol "-" and the error message M2 are deleted. In this case, if the execution key 131d is pressed by the user, the processor 11 causes the working space 141 to display "0" as a calculation result.

According to the present embodiment, it is determined whether or not there is an error in an input based on a mathematical function and a mode setting, etc. during an input of a mathematical expression. If it is determined that there is an error in an input, a part presumed to be an error is highlighted with an error message. It is thereby possible for a user to notice an error in the input, without actually carrying out the calculation. Since the part presumed to be an error is highlighted, the user is able to identify a part that needs to be corrected.

Hereinafter, a modification of the present embodiment will be described. In the foregoing embodiment, highlighting is performed by displaying an underline. In contrast, highlighting may be in any form as long as it can make a user aware of a part presumed to be an error. For example, the highlighting may be realized by various types of indications, such as a change of a color in a part presumed to be an error, a change of a gray level, or flashing.

In the present embodiment, the highlighting is performed when a user inputs an argument. However, highlighting may be performed at a different timing. For example, highlighting may be performed at the time of calculation. For example, a display of an overflow of a calculation result may be made when the calculation is carried out.

The error messages presented in the foregoing embodiment are not necessarily displayed under mathematical expressions. For example, an error message may be displayed in a form of dialogue.

The error messages presented in the foregoing embodiment are merely examples. Error messages may be set as appropriate for mathematical rules, specifications of the calculator 1, and a currently activated mode. For example, when a division by zero is included in an input mathematical expression, an underline is applied to the part in which a division by zero is carried out and an error message indicating that a division by zero is carried out may be displayed.

The processing described in relation to the above embodiments may be stored in the form of programs executable by a computer. The program can be stored in a storage medium of an external storage device, such as a magnetic disk, an optical disk, or a semiconductor memory, and may be distributed. In this case, the calculator 1 is not necessarily a scientific calculator and may be a terminal device, such as a personal computer or a smart phone, etc. The calculator program in the embodiment may be a web application executed through cooperation between a server and a device. Furthermore, the mathematical expression display control program in the present embodiment is included in a calculator program. In contrast, the mathematical expression display control program in the present embodiment may be a program separate from a calculator program.

The present disclosure is not limited to the above described embodiment and various modifications can be made without departing from the scope of the present invention in practical stages. The foregoing embodiments may be appropriately combined and practiced. In addition, the above-described embodiments include inventions of various stages, and a variety of inventions can be derived by properly combining structural elements of one embodiment or by properly combining structural elements of different embodiments. For example, if the object of the invention is achieved and the advantages of the invention are attained even after some of the structural elements disclosed in connection with the embodiments are deleted, the structure made up of the resultant structural elements can be extracted as an invention.

## Claims

1. A mathematical expression display control apparatus comprising:
a determination unit (11) that determines whether or not there is an error in a mathematical expression that is input by a user; and
a display control unit (11) that causes a display device (14) to display, if it is determined that there is an error in the mathematical expression, an erroneous part with highlighting to differentiate it from the other parts in the mathematical expression.

2. The mathematical expression display control apparatus according to claim 1, wherein
the display control unit causes the display device to display a message indicating content of the error.

3. The mathematical expression display control apparatus according to claim 1 or 2, wherein
the determination unit determines whether there is an error based on a determination as to whether or not there is an input that is not accepted by a function type which is set for each mathematical expression in the user's input mathematical expression.

4. The mathematical expression display control apparatus according to claim 3, wherein
the input not accepted by the function type is determined in accordance with specifications of an apparatus that calculates mathematical expressions that are input.

5. The mathematical display control apparatus according to claim 3 or 4, wherein
the display control unit causes the display device to display, as the erroneous part, a part where an input not accepted by the function type has been made with highlighting to distinguish the part from the other parts.

6. The mathematical display control apparatus according to one of claims 1 to 5, wherein
the determination unit determines whether or not there is an error based on a determination as to whether or not there is an input not accepted by a mode setting of the apparatus in the user's input mathematical expression.

7. The mathematical expression display control apparatus according to claim 6, wherein
the mode is a real number mode that allows a calculation of real numbers only and a complex number mode that allows a calculation of complex numbers in addition to real numbers, and
the determination unit determines whether or not there is an error if the mode setting is the real number mode and in accordance with a determination as to whether or not there is an input that returns a complex number as a calculation result in the user's input mathematical expression.

8. The mathematical expression display control apparatus according to claim 6 or 7, wherein
the display control unit causes the display device to display, as the erroneous part, a part where an input not accepted by the mode setting has been made with highlighting to distinguish the part from the other parts.

9. A mathematical expression display control method, the method comprising:
determining, by a determination unit of a mathematical expression display control apparatus, whether or not there is an error in a mathematical expression that is input by a user; and
causing, by a display control unit of the mathematical expression display control apparatus, a display device to display, if it is determined that there is an error in the mathematical expression, an erroneous part with highlighting to distinguish the part from the other parts.

10. A mathematical expression display control causing a computer to perform:
determining whether or not there is an error in a mathematical expression that is input by a user; and
causing a display device to display, if it is determined that there is an error in the mathematical expression, an erroneous part with highlighting to differentiate the part from other parts.
